# EUROPEAN PATENT SPECIFICATION

(11) **EP 1 375 860 B1**
(45) Date of publication and mention of the grant of the patent: **16.04.2008**
(21) Application number: 03010410.3
(22) Date of filing: 08.05.2003
(51) Int. Cl.: F02B 61/02, F02B 75/16

(54) **Power unit for motorcycle**
Brennkraftmaschine für ein Motorrad
Moteur pour motocycle

(30) Priority: 26.06.2002 JP 2002185594
(43) Date of publication of application: 02.01.2004
(73) Proprietor: HONDA GIKEN KOGYO KABUSHIKI KAISHA, Minato-ku, Tokyo (JP)
(72) Inventor: Kakemizu, Kenichiro, Wako-shi, Saitama-ken (JP); Hatayama, Atsushi, Wako-shi, Saitama-ken (JP); Tsuchita, Ryuji, Wako-shi, Saitama-ken (JP)
(74) Representative: Liska, Horst

(56) References cited:
- EP-A- 0 960 808
- US-A- 4 702 340
- PATENT ABSTRACTS OF JAPAN vol. 1999, no. 03, 31 March 1999 (1999-03-31) & JP 10 324279 A (KAWASAKI HEAVY IND LTD), 8 December 1998 (1998-12-08)
- PATENT ABSTRACTS OF JAPAN vol. 2000, no. 03, 30 March 2000 (2000-03-30) & JP 11 342754 A (YAMAHA MOTOR CO LTD), 14 December 1999 (1999-12-14)
- PATENT ABSTRACTS OF JAPAN vol. 2000, no. 20, 10 July 2001 (2001-07-10) & JP 2001 065650 A (SUZUKI MOTOR CORP), 16 March 2001 (2001-03-16)

## Description

The present invention relates to a motorcycle having a power unit comprising an engine with a crankshaft arranged in the right and left directions of a body frame and a transmission system including a V belt type automatic transmission shifting an output of the engine to transmit it to an axle side of a rear wheel provided between the crankshaft and the axle of the rear wheel.

A motorcycle according to the preamble of claim 1 is known from JP-A-10 324279 and JP-A-2001 65650.

A further motorcycle having a power unit has already been known by Japanese Patent Application Laid-Open No. Hei 11-342754.

In the above prior art power unit for a motorcycle, a drive pulley of a V belt type automatic transmission is arranged coaxially with a crankshaft. To secure an axial distance from the axis of the drive pulley to a driven pulley shaft, dead space is caused about the crankshaft. To secure a bank angle of the motorcycle, the drive pulley and the driven pulley having a relatively large diameter are arranged above. The center of gravity of an engine is high, resulting in reduced ride comfort of the motorcycle.

It is an object of the present invention to provide a motorcycle having a power unit which can arrange a V belt type automatic transmission above and can be smaller while preventing the center of gravity of an engine from being high to maintain ride comfort.

This object is achieved by a motorcycle having the features of claim 1.

A motorcycle having a power unit comprises an engine with a crankshaft arranged in the right and left directions of a body frame and a transmission system including a V belt type automatic transmission shifting an output of the engine to transmit it to an axle side of a rear wheel provided between the crankshaft and the axle of the rear wheel, wherein the V belt type automatic transmission is spaced from the crankshaft in a plane orthogonal to the axis of the crankshaft and has a drive pulley shaft having an axis in parallel with the crankshaft and a driven pulley shaft having an axis in parallel with the drive pulley shaft, and the drive pulley shaft and the driven pulley shaft are arranged above a straight line connecting the crankshaft and the axle of the rear wheel in the side view of the motorcycle.

In such construction, the V belt type automatic transmission is spaced from the crankshaft. Dead space can be prevented from being caused about the crankshaft to make the power unit smaller. The drive pulley and the driven pulley having a relatively large diameter can be arranged above while preventing the center of gravity of the engine from being high to maintain ride comfort of the motorcycle.

Preferably, a clutch connecting and disconnecting power transmission between the crankshaft and the drive pulley shaft and a drive pulley as the component of the V belt type automatic transmission are provided at both ends of the drive pulley shaft rotatably supported by an engine body of the engine. Furthermore, according to the invention, a case of the transmission system is supported by the engine body so as to be swung about the axis of the drive pulley shaft, and the axle of the rear wheel is axially supported by the case. In such construction, the drive pulley having a relatively large diameter and the clutch are arranged coaxially. The center of gravity of the engine can be lowered and the power unit can be smaller. The case of the power unit serving as a rear fork supporting the rear wheel for swinging up and down can be set to be relatively long to make an articulation angle relatively small.

Preferably, a rear cushion unit is provided between the lower part of the engine body mounted on the body frame and the lower part of the case. In such construction, the rear cushion unit can be arranged below the power unit to secure ground clearance of the motorcycle.

Preferably, a pivot bearing interposed between the engine body and the case is arranged between the clutch and the drive pulley. In such construction, the space between the clutch and the drive pulley is used effectively to arrange the pivot bearing. The power unit can be further smaller.

The present invention will be described below based on an embodiment of the present invention shown in the attached drawings, in which:
Fig. 1 is a side view of a motorcycle;
Fig. 2 is a cutaway side view enlarging the rear part of the motorcycle of Fig. 1;
Fig. 3 is an enlarged cross-sectional view taken along line 3-3 of Fig. 2; and
Fig. 4 is an enlarged cross-sectional view taken along line 4-4 of Fig. 2.

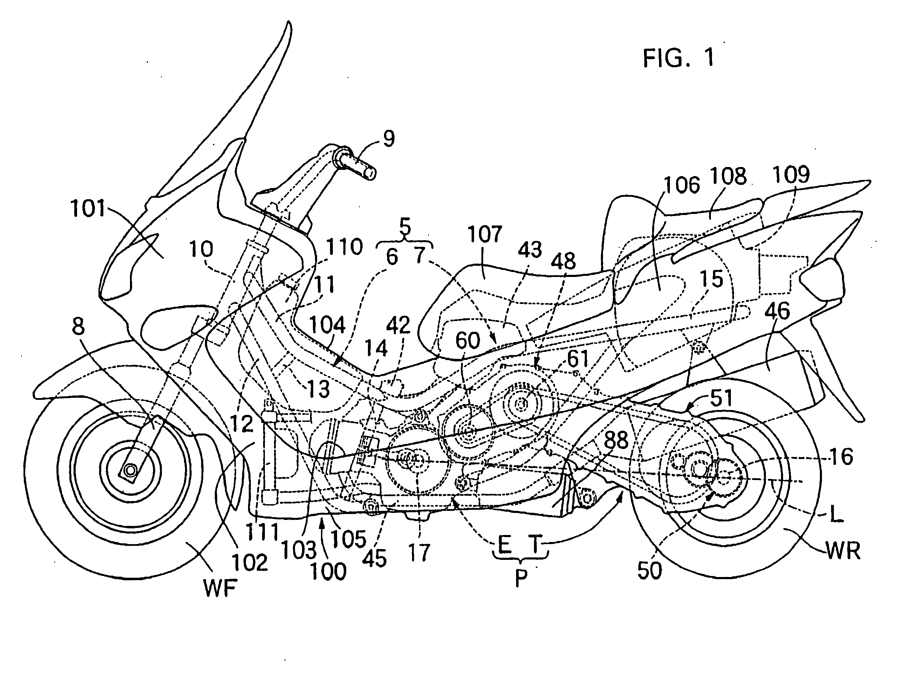

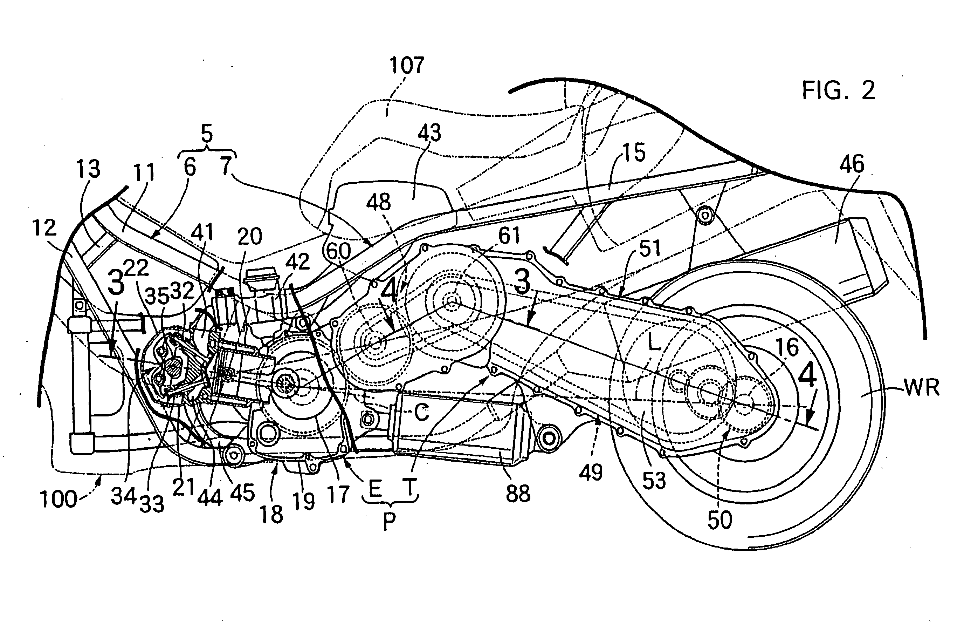

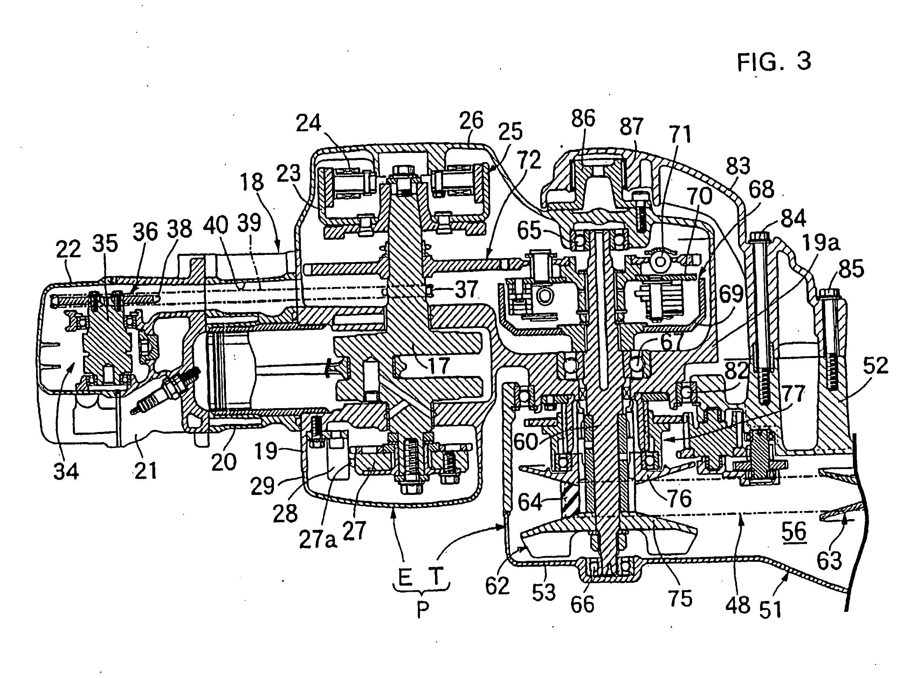

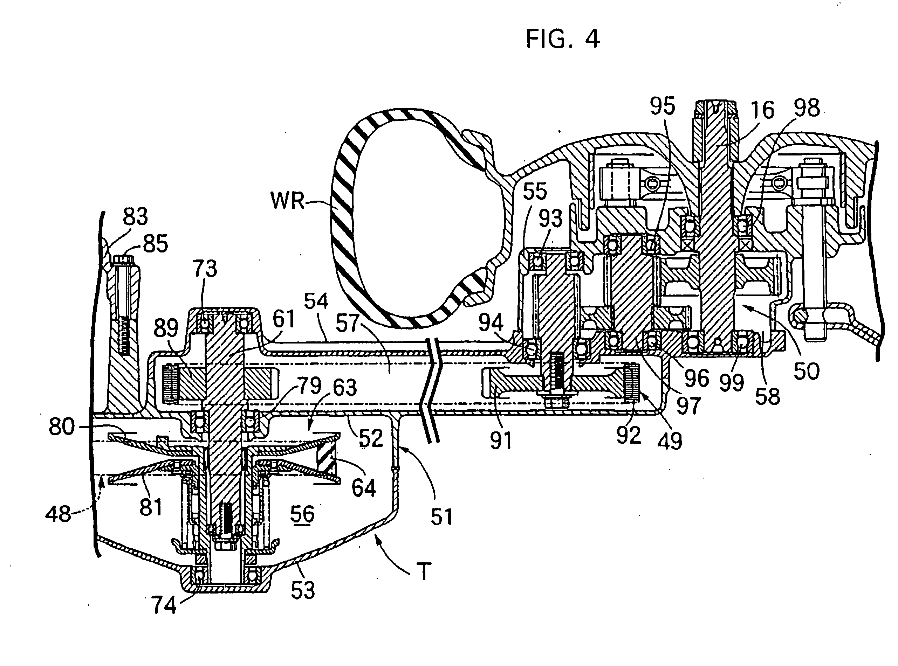

Figs. 1 to 4 show an embodiment of the present invention. Fig. 1 is a side view of a motorcycle. Fig. 2 is a cutaway side view enlarging the rear part of the motorcycle of Fig. 1. Fig. 3 is an enlarged cross-sectional view taken along line 3-3 of Fig. 2. Fig. 4 is an enlarged cross-sectional view taken along line 4-4 of Fig. 2.

In Figs. 1 and 2, a body frame 5 of a scooter type motorcycle has a front frame 6 and a rear frame 7. The front frame 6 has a head pipe 10 steerably supporting a front fork 8 axially supporting a front wheel WF and a steering wheel 9 coupled to the front fork 8; a pair of right and left upper down frames 11 ... extended rearwardly and downwardly from the head pipe 10; a pair of right and left lower down frames 12 - lower than the upper down frames 11 ... extended rearwardly and downwardly from the head pipe 10; and coupling frames 13 ..., 14 ... coupling the upper and lower down frames 11 ..., 12 .... In the rear frame 7, the rear ends of a pair of right and left inclined frames 15 continuous with the rear ends of the upper down frames 11 ... extended rearwardly and upwardly are coupled to each other.

On the body frame 5 is mounted a power unit P having an engine E and a transmission system T provided between the engine E and an axle 16 of a rear wheel WR.

With reference to Fig. 3, the engine E is a single cylinder engine having a crankshaft 17 having an axis extended in the right and left directions of the body frame 5. An engine body 18 has a crankcase 19 rotatably supporting the crankshaft 17, a cylinder 20 having a cylinder axis C extended forwardly and upwardly from the crankcase 19 and coupled to the crankcase 19, a cylinder head 21 coupled to the cylinder 20, and a head cover 22 coupled to the cylinder head 21 on the opposite side of the cylinder 20.

The engine body 18 is supported by the rear part of the upper down frames 11 ..., the rear part of the lower down frames 12 ..., and the middle part of the inclined frames 15 ... .

One end of the crankshaft 17 is projected from the crankcase 19 at the right side along the travel direction of the motorcycle. A rotor 23 fixed onto the one end of the crankshaft 17 and a stator 24 housed in the rotor 23 form an AC generator 25. The AC generator 25 is covered by a right engine cover 26 coupled to the crankcase 19. The stator 24 is fixed onto the right engine cover 26.

The other end of the crankshaft 17 is projected from the crankcase 19 at the left side along the travel direction of the motorcycle. A signal rotor 27 having a plurality of projections 27a ... is fixed in the outer circumference of the other end of the crankshaft 17. A sensor 28 detecting the projections 27a ... is supported in the crankcase 19. Further, the signal rotor 27 and the sensor 28 are covered by a left engine cover 29 coupled to the crankcase 19.

Between the cylinder head 21 and the head cover 22 is housed a valve system 34 drivingly opening and closing an intake valve 32 and an exhaust valve 33 arranged on the cylinder head 21 and spring-biased in the valve closing direction.

The known valve system 34 has a camshaft 35 rotatable about the axis in parallel with the crankshaft 17. Between the camshaft 35 and the crankshaft 17 is provided a timing transmission mechanism 36 transmitting the rotating power of the crankshaft 17 to the camshaft 35 at a speed reducing ratio of 1/2. The timing transmission mechanism 36 has a drive sprocket 37 fixed onto the crankshaft 17 between the AC generator 25 and the crankcase 19, a driven sprocket 38 fixed onto the camshaft 35, and an endless cam chain 39 entrained about the drive and driven sprockets 37, 38. The engine body 18 is formed with a cam chain chamber 40 for running the cam chain 39 in the part from the crankcase 19 via the cylinder 20 and the cylinder head 21 to the head cover 22.

An intake port 41 opened and closed by the intake value 32 is provided on the upper side surface of the cylinder head 21. To the intake port 41 is connected an air cleaner 43 arranged above the power unit P via a carburetor 42. An exhaust port 44 opened and closed by the exhaust valve 33 is provided on the lower side surface of the cylinder head 21. The rear end of an exhaust pipe 45 connected to the exhaust port 44 and extended to the rear side is connected to an exhaust muffler 46 arranged at the right side of the rear wheel WR.

With reference to Fig. 4, the transmission system T has a V belt type automatic transmission 48 automatically and continuously shifting power outputted from the crankshaft 17, chain type transmission means 49 decelerating the output of the V belt type automatic transmission 48, and a decelerating gear train 50 provided between the chain type transmission means 49 and the axle 16 of the rear wheel WR.

A case 51 of the transmission system T has a case main body 52 having its front part supported by a case support part 19a provided integrally with the crankcase 19 to be extended rearwardly and extended to the left side of the rear wheel WR; a left side case 53 coupled to the case main body so as to cover the left side of the front half part of the case main body 52; a right side case 54 coupled to the case main body so as to cover the right side of the rear half part of the case main body 52; and a rear case 55 coupled to the right side case 54 so as to cover the right side of the rear half part of the right side case 54. A first transmission chamber 56 is formed between the front half part of the case main body 52 and the left side case 53. A second transmission chamber 57 is formed between the rear half part of the case main body 52 and the right side case 54. A gear chamber 58 is formed between the right side case 54 and the rear case 55.

The V belt type automatic transmission 48 is housed in the first transmission chamber 56. The V belt type automatic transmission 48 is spaced from the crankshaft 17 in a plane orthogonal to the axis of the crankshaft 17 and has a drive pulley shaft 60 having an axis in parallel with the crankshaft 17, a driven pulley shaft 61 having an axis in parallel with the drive pulley shaft 60, a drive pulley 62 fitted in the drive pulley shaft 60, a driven pulley 63 fitted in the driven pulley shaft 61, and an endless V belt 64 entrained about the drive pulley 62 and the driven pulley 63.

The drive pulley shaft 60 is arranged rearwardly, slantingly and upwardly from the crankshaft 17. One end of the drive pulley shaft 60 is rotatably supported by the right engine cover 26 via a ball bearing 65. The other end of the drive pulley shaft 60 is rotatably supported by the left side case 53 via a ball bearing 66. The middle part in the axis direction of the drive pulley shaft 60 is extended rotatably through the case support part 19a integral with the crankcase 19. A ball bearing 67 is interposed between the case support part 19a and the drive pulley shaft 60.

A centrifugal clutch 68 is fitted in one end of the drive pulley shaft 60. An output member 69 of the centrifugal clutch 68 is coupled to the drive pulley shaft 60 so as not to be rotated relatively. An input member 70 of the centrifugal clutch 68 is coupled to the crankshaft 17 via a damper 71 and a gear train 72. The drive pulley 62 has a fixed pulley half body 75 fixed onto the other end of the drive pulley shaft 60; a movable pulley half body 76 slidably supported by the drive pulley shaft 60 so as to be close to or away from the fixed pulley half body 75; and a centrifugal mechanism 77 exerting a force pressing the movable pulley half body 76 onto the fixed pulley half body 75 side according to increase in the number of revolutions of the drive pulley shaft 60.

Both ends of the driven pulley shaft 61 are rotatably supported by the right side case 54 and the left side case 53 via ball bearings 73, 74. A ball bearing 79 is interposed between the middle part of the driven pulley shaft 61 extended rotatably through the case main body 52 and the case main body 52.

The driven pulley 63 has a fixed pulley half body 80 supported by the driven pulley shaft 61 so as to be rotated relatively by fixing the position of the axial direction, and a movable pulley half body 81 slidably and relative-rotatably supported by the fixed pulley half body 80 so as to be close to or apart from the fixed pulley half body 80 and spring-biased to the fixed pulley half body 80 side.

As shown in Figs. 1 and 2, the drive pulley shaft 60 and the driven pulley shaft 61 of the V belt type automatic transmission 48 are arranged above a straight line L connecting the crankshaft 17 and the axle 16 of the rear wheel WR in the side view of the motorcycle.

The front part of the case 51 of the transmission system T is supported by the case support part 19a of the crankcase 19 of the engine body 18 so as to be swung about the axis of the drive pulley shaft 60. A pivot bearing 82 interposed between the case support part 19a of the crankcase 19 and the case main body 52 of the case 51 is arranged between the clutch 68 and the drive pulley 62 fitted in both ends of the drive pulley shaft 60.

An arm 83 covering part of the right engine cover 26 is fastened at the right side of the front part of the case main body 52 with bolts 84, 85. The front part of the arm 83 is swingably supported by a support shaft 86 coaxial with the drive pulley shaft 60 fastened to the outer surface of the right engine cover 26 via a roller bearing 87. In other words, the case 51 of the transmission system T is swingably supported by the engine body 18 in two positions spaced in the axial direction of the drive pulley shaft 60.

In addition, a rear cushion unit 88 for cushioning up-and-down swinging of the case 51 is provided between the lower part of the crankcase 19 of the engine body 18 and the lower part of the case main body 52 of the case 51.

The chain type transmission means 49 is housed in the second transmission chamber 57. An endless chain 92 is entrained about a drive sprocket 89 fixed onto the driven pulley shaft 61 in the second transmission chamber 57 and a driven sprocket 91 fixed onto an output shaft 90.

One end of the output shaft 90 is rotatably supported by the rear case 55 via a ball bearing 93. A ball bearing 94 is interposed between the middle part of the output shaft 90 extended rotatably through the rear part of the case main body 52 and the case main body 52.

The decelerating gear train 50 is housed in the gear chamber 58 so that the rotating power of the output shaft 90 is decelerated and transmitted to the axle 16 via a middle shaft 97. Both ends of the middle shaft 97 are rotatably supported by the rear case 55 and the case main body 52 via ball bearings 95, 96. The axle 16 is rotatably supported by the rear case 55 and the case main body 52 via ball bearings 98, 99. In other words, the axle 16 is axially supported by the rear part of the case 51. The rear wheel WR is fitted in the projection part of the axle 16 from the rear case 55.

Part of the power unit P and the body frame 5 are covered by a body cover 100 made of resin. The body cover 100 has a front cover 101 covering the front part of the head pipe 17 and the upper part of the front wheel WF; a pair of right and left leg shields 102 ... joined to the right and left sides of the front cover 101 to cover the forward side of the legs of a driver; a pair of right and left leg placing parts 103 ... continuous with the leg shields 102 to support the legs of the driver; a floor tunnel part 104 raised above between the leg placing parts 103 ..; skirt parts 105 ... hung downwardly from the outer edges of the leg placing parts 103 ...; and a rear cover 106 covering the right and left sides of the rear part of the body frame 5 joined to the leg placing parts 103 ... and the floor tunnel part 104.

On the rear cover 106, a driver seat 107 on which a driver seats and a passenger seat 108 on which a passenger seats are provided to be opened and closed. The driver seat 107 is provided on the rear cover 106 so as to cover the air cleaner 43 from above. The passenger seat 108 is provided on the rear cover 106 so as to cover a containing box 109 supported by the rear part of the body frame 5 to be opened and closed.

The floor tunnel part 104 houses a fuel tank 110 supported by the front part of the body frame 5. A radiator 111 supported by the front part of the body frame 5 so as to be positioned forwardly of the engine E is covered by the leg shields 102

The operation of this embodiment will be described. The transmission system T forming the power unit P with the engine E includes the V belt type automatic transmission 48. The V belt type automatic transmission 48 is spaced from the crankshaft 17 in a plane orthogonal to the axis of the crankshaft 17 extended in the right and side directions of the body frame 5 and has the drive pulley shaft 60 having an axis in parallel with the crankshaft 17 and the driven pulley shaft 61 having an axis in parallel with the drive pulley shaft 61. The drive pulley shaft 60 and the driven pulley shaft 61 are arranged above the straight line L connecting the crankshaft 17 and the axle 16 the rear wheel WR in the side view of the motorcycle.

The V belt type automatic transmission 48 is spaced from the crankshaft 17. Dead space can be prevented from being caused about the crankshaft 17 to make the power unit P smaller. In addition, when the drive pulley 62 and the driven pulley 63 having a relatively large diameter are arranged above, the center of gravity of the engine E is not high. The power unit P can be smaller while maintaining ride comfort of the motorcycle.

The clutch 68 connecting and disconnecting power transmission between the crankshaft 17 and the drive pulley shaft 60 and the drive pulley 62 are provided at both ends of the drive pulley shaft 60 rotatably supported by the crankcase 19 of the engine body 18. The case 51 of the transmission system T is supported by the engine body 18 so as to be swung on the axis of the drive pulley shaft 60. The axle 16 of the rear wheel WR is axially supported by the case 51.

The drive pulley 62 having a relatively large diameter and the clutch 68 are arranged coaxially. The center of gravity of the engine E can be lowered and the power unit P can be smaller. The case 51 of the power unit P serving as a rear fork supporting the rear wheel WR for swinging up and down can be set to be relatively long to make an articulation angle relatively small.

The rear cushion unit 88 is provided between the lower part of the engine body 18 mounted on the body frame 5 and the lower part of the case 51 of the transmission system T. The rear cushion unit 88 can be arranged below the power unit P to secure ground clearance of the motorcycle.

The pivot bearing 82 interposed between the case support part 19a of the crankcase 19 of the engine body 18 and the case 51 of the transmission system T is arranged between the clutch 68 and the drive pulley 62. The space between the clutch 68 and the drive pulley 62 is used effectively to arrange the pivot bearing 82. The power unit P can be further smaller.

The embodiment of the present invention is described above. The present invention is not limited to the embodiment and various design modifications can be made without departing from the present invention described in claims.

As described above, according to the invention, dead space can be prevented from being caused about the crankshaft to make the power unit smaller. The drive pulley and the driven pulley having a relatively large diameter can be arranged above while preventing the center of gravity of the engine from being high to maintain ride comfort of the motorcycle.

Preferably, the drive pulley having a relatively large diameter and the clutch are arranged coaxially. Furthermore, the center of gravity of the engine can be lowered and the power unit can be smaller. Moreover, according to the invention, the case of the power unit serving as a rear fork supporting the rear wheel for swinging up and down can be set to be relatively long to make an articulation angle relatively small.

Preferably, the rear cushion unit can be arranged below the power unit to secure ground clearance of the motorcycle.

Preferably, the space between the clutch and the drive pulley is used effectively to arrange the pivot bearing. The power unit can be further smaller.

A motorcycle having a power unit comprises an engine with a crankshaft arranged in the right and left directions of a body frame and a transmission system including a V belt type automatic transmission provided between the crankshaft and an axle of a rear wheel, which can arrange the V belt type automatic transmission above and can be smaller while preventing the center of gravity of the engine from being high to maintain ride comfort.

The V belt type automatic transmission 48 is spaced from a crankshaft 17 in a plane orthogonal to the axis of the crankshaft 17 and has a drive pulley shaft 60 having an axis in parallel with the crankshaft 17 and a driven pulley shaft 61 having an axis in parallel with the drive pulley shaft 60. The drive pulley shaft 60 and the driven pulley shaft 61 are arranged above a straight line L connecting the crankshaft 17 and an axle 16 of a rear wheel WR in the side view of a motorcycle.

## Claims

1. A motorcycle having a power unit comprising:
an engine (E) with a crankshaft (17) arranged in the right and left directions of a body frame (5) and
a transmission system (T) including a V belt type automatic transmission (48) shifting an output of the engine (E) to transmit it to an axle (16) side of a rear wheel (WR) provided between said crankshaft (17) and the axle (16) of the rear wheel (WR),
wherein said V belt type automatic transmission (48) is spaced from the crankshaft (17) in a plane orthogonal to the axis of said crankshaft (17) and has a drive pulley shaft (60) having an axis in parallel with the crankshaft (17) and a driven pulley shaft (61) having an axis in parallel with the drive pulley shaft (60), and wherein said drive pulley shaft (60) and said driven pulley shaft (61) are arranged above a straight line (L) connecting said crankshaft (17) and the axle (16) of the rear wheel (WR) in the side view of the motorcycle,
**characterized in that**
the transmission system (T) comprises a case (51) for housing the V belt type automatic transmission (48), the front part of which is swingably supported by an engine body (18) of said engine (E) so as to be swung about the axis of said drive pulley shaft (60), and the rear part of which axially supports the axle (16) of the rear wheel (WR),
wherein the driven pulley shaft (61) is rotatably supported by the case (51) and swings along with the rear wheel (WR).

2. The motorcycle according to claim 1, wherein a clutch (68) connecting and disconnecting power transmission between said crankshaft (17) and said drive pulley shaft (60) and a drive pulley (62) as the component of said V belt type automatic transmission (48) are provided at both ends of said drive pulley shaft (60) rotatably supported by the engine body (18) of said engine (E).

3. The motorcycle according to claim 1 or 2, wherein a rear cushion unit (88) is provided between the lower part of said engine body (18) mounted on the body frame (5) and the lower part of said case (51).

4. The motorcycle according to claim 2, wherein a pivot bearing (82) interposed between said engine body (18) and said case (51) is arranged between said clutch (68) and said drive pulley (62).

5. The motorcycle according to any one of claims 1 to 4, wherein a drive sprocket (89) of a chain type transmission means (49) for transmitting power from said V belt type automatic transmission (48) to said rear wheel (WR) is fixed to said driven pulley shaft (61).

## Patentansprüche

1. Kraftrad mit einer Antriebseinheit, umfassend:
einen Motor (E) mit einer Kurbelwelle (17), welche in der rechten und linken Richtung eines Rumpfrahmens (5) angeordnet ist, und
ein Getriebesystem (T), welches ein Automatikgetriebe vom Keilriementyp (48) umfasst, welches eine Ausgabe von dem Motor (E) verändert, um sie zur Seite einer Achse (16) eines Hinterrads (WR) zu übertragen, welches zwischen der Kurbelwelle (17) und der Achse (16) des Hinterrads (WR) vorgesehen ist,
wobei das Automatikgetriebe vom Keilriementyp (48) von der Kurbelwelle (17) in einer Ebene orthogonal zu der Achse der Kurbelwelle (17) beabstandet ist und eine Antriebsriemenscheibenwelle (60) mit einer zu der Kurbelwelle (17) parallelen Achse hat und eine Abtriebsriemenscheibenwelle (61) mit einer zu der Antriebsriemenscheibenwelle (60) parallelen Achse hat, und wobei die Antriebsriemenscheibenwelle (60) und die Abtriebsriemenscheibenwelle (61) in einer Seitenansicht des Kraftrads oberhalb einer geraden Linie (L) angeordnet sind, welche die Kurbelwelle (17) und die Achse (16) des Hinterrads (WR) verbindet,
**dadurch gekennzeichnet, dass**
das Getriebesystem (T) ein Gehäuse (51) zur Aufnahme des Automatikgetriebes vom Keilriementyp (48) umfasst, dessen vorderes Teil schwenkbar an einem Motorkörper (18) des Motors (E) derart gelagert ist, dass es um die Achse der Antriebsriemenscheibenwelle (60) geschwenkt wird, und dessen hinteres Teil die Achse (16) des Hinterrads (WR) axial lagert, wobei die Abtriebsriemenscheibenwelle (61) von dem Gehäuse (51) drehbar gelagert ist und zusammen mit dem Hinterrad (WR) schwingt.

2. Kraftrad nach Anspruch 1, wobei eine Kupplung (68), welche eine Kraftübertragung zwischen der Kurbelwelle (17) und der Antriebsriemenscheibenwelle (60) herstellt und unterbricht, und eine Antriebsriemenscheibe (62) als dem Bestandteil des Automatikgetriebes vom Keilriementyp (48) an beiden Enden der von dem Motorkörper (18) des Motors (E) drehbar gelagerten Antriebsriemenscheibenwelle (60) vorgesehen sind.

3. Kraftrad nach Anspruch 1 oder 2, wobei eine hintere Dämpfereinheit (88) zwischen dem unteren Teil des an dem Rumpfrahmen (5) angebrachten Motorkörpers (18) und dem unteren Teil des Gehäuses (51) vorgesehen ist.

4. Kraftrad nach Anspruch 2, wobei ein zwischen dem Motorkörper (18) und dem Gehäuse (51) angeordnetes Schwenklager (82) zwischen der Kupplung (68) und der Antriebsriemenscheibe (62) angeordnet ist.

5. Kraftrad nach einem der Ansprüche 1 bis 4, wobei ein Antriebskettenrad (89) von einem Getriebemittel vom Kettentyp (49) zur Übertragung einer Kraft von dem Automatikgetriebe vom Keilriementyp (48) zu dem Hinterrad (WR) an der Abtriebsriemenscheibenwelle (61) befestigt ist.

## Revendications

1. Un motocycle, comprenant une unité motrice, comprenant:
un moteur thermique (E) avec un vilebrequin (17) agencé vers la droite et vers la gauche d'un châssis de carrosserie (5), et
un système de transmission (T), comprenant une transmission automatique (48) de type à courroie trapézoïdale, transmettant une puissance de sortie du moteur thermique (E) pour la transmettre à un côté essieu (16) d'une roue arrière (WR), prévu entre ledit vilebrequin (17) et l'essieu (16) de la roue arrière (WR),
dans lequel ladite transmission automatique (48) de type à courroie trapézoïdale est espacée du vilebrequin (17) dans un plan perpendiculaire à l'axe dudit vilebrequin (17), et présente un arbre de poulie d'entraînement (60), ayant un axe parallèle au vilebrequin (17), et un arbre de poulie réceptrice (61), ayant un axe parallèle à l'arbre de poulie d'entraînement (60), et dans lequel ledit arbre de poulie d'entraînement (60) et ledit arbre de poulie réceptrice (61) sont agencés au-dessus d'une ligne droite (L) reliant ledit vilebrequin (17) et l'essieu (16) de la roue arrière (WR) en observant le motocycle en vue de côté,
**caractérisé en ce que**
le système de transmission (T) comprend un carter (51) pour loger la transmission automatique (48) de type à courroie trapézoïdale, dont la partie avant est montée de façon oscillante par un corps de moteur (18) dudit moteur thermique (E) pour osciller autour de l'axe dudit arbre de poulie d'entraînement (60), et dont la partie arrière supporte axialement l'essieu (16) de la roue arrière (WR),
dans lequel l'arbre de poulie réceptrice (61) est supporté à rotation par le carter (51) et oscille avec la roue arrière (WR).

2. Le motocycle selon la revendication 1, dans lequel un embrayage (68), connectant et déconnectant la transmission de puissance entre ledit vilebrequin (17) et ledit arbre de poulie d'entraînement (60), et une poulie d'entraînement (62) en tant que composant de ladite transmission automatique (48) de type à courroie trapézoïdale, sont prévus aux deux extrémités dudit arbre de poulie d'entraînement (60), supporté à rotation par le corps de moteur (18) dudit moteur thermique (E).

3. Le motocycle selon la revendication 1 ou 2, dans lequel une unité formant coussin arrière (88) est prévue entre la partie inférieure dudit corps de moteur (18), monté sur ledit châssis de carrosserie (5), et la partie inférieure dudit carter (51).

4. Le motocycle selon la revendication 2, dans lequel un palier de pivotement (82), interposé entre ledit corps de moteur (18) et ledit carter (51), est agencé entre ledit embrayage (68) et ladite poulie d'entraînement (62).

5. Le motocycle selon l'une quelconque des revendications 1 à 4, dans lequel un pignon d'entraînement (89) de moyens de transmission de type à chaîne (49), pour la transmission de puissance depuis ladite transmission automatique (48) de type à courroie trapézoïdale à ladite roue arrière (WR), est fixé sur ledit arbre de poulie réceptrice (61).
